# EUROPÄISCHE PATENTSCHRIFT

(11) **EP 1 711 775 B1**
(45) Veröffentlichungstag und Bekanntmachung des Hinweises auf die Patenterteilung: **02.12.2009**
(21) Anmeldenummer: 05714877.7
(22) Anmeldetag: 20.01.2005
(51) Int. Cl.: F42B 33/06, B60R 21/01

(54) **VORRICHTUNG UND VERFAHREN ZUR ENTSORGUNG / ENTSORGUNGSZÜNDUNG VON INSASSENSCHUTZEINRICHTUNGEN / VERKEHRSTEILNEHMERSCHUTZEINRICHTUNGEN MIT PYROTECHNISCHEN ZÜNDERN**
DEVICE AND METHOD FOR THE DISPOSAL/DISPOSAL-FIRING OF OCCUPANT PROTECTION DEVICES/ROAD USER PROTECTION DEVICES WITH PYROTECHNIC IGNITERS
DISPOSITIF ET PROCEDE DE DESTRUCTION/ D'INITIATION DE DESTRUCTION DE DISPOSITIFS DE PROTECTION DE PASSAGERS / DISPOSITIFS DE PROTECTION D'USAGERS DE LA ROUTE, COMPRENANT DES SYSTEMES D'INITIATION PYROTECHNIQUES

(30) Priorität: 06.02.2004 DE 102004006032
(43) Veröffentlichungstag der Anmeldung: 18.10.2006
(73) Patentinhaber: Conti Temic microelectronic GmbH, 90411 Nürnberg (DE)
(72) Erfinder: FENDT, Günter, 85529 Schrobenhausen (DE); WEICHENBERGER, Lothar, 86669 Klingsmoos (DE); HELLDÖRFER, Reinhard, 91083 Baiersdorf (DE); GÖRNIG, Thomas, 85229 Markt Indersdorf (DE)
(86) Internationale Anmeldenummer: PCT/DE2005/000071
(87) Internationale Veröffentlichungsnummer: WO 2005/075934

(56) Entgegenhaltungen:
- WO-A-2004/110820
- DE-A1- 10 054 681
- DE-A1- 10 233 587
- DE-A1- 10 260 475
- DE-A1- 10 346 623
- DE-A1- 19 821 784

## Beschreibung

Die Erfindung betrifft eine Vorrichtung, sowie ein Verfahren zum Entsorgen von Insassenschutzeinrichtungen /. Verkehrsteilnehmerschutzeinrichtungen mit einem pyrotechnischen Zünder. Das Verfahren und die Vorrichtung sind insbesondere bei der Demontage bzw. Verschrottung und Schrottwiederverwertung zu entsorgender Kraftfahrzeuge vorteilhaft einzusetzen.

Insbesondere in Kraftfahrzeugen haben sich heute Insassenschutzeinrichtungen Verkehrsteilnehmerschutzeinrichtungen mit pyrotechnischen Zündern, beispielsweise Airbags, Gurtstraffer, Fußgängerschutz- & Überrollsysteme, aufgrund ihrer schnellen Reaktionszeit und ihren nachweisbaren Insassenschutzwirkung / Verkehrsteilnehmerschutzwirkung durchgesetzt. Die Insassenschutzeinrichtungen / Verkehrsteilnehmerschutzeinrichtungen werden durch einen Auslösebefehl gezündet, der von einem Steuergerät in Abhängigkeit von auf das Fahrzeug wirkenden Beschleunigungskräften erzeugt wird.

Nachteilig ist jedoch die bisher weitgehend offene Frage der Entsorgung von Kraftfahrzeugen mit derartigen Insassenschutzeinrichtungen / Verkehrsteilnehmerschutzeinrichtungen. So ist es aus Arbeits- und Brandschutzgründen nicht vertretbar, Kraftfahrzeuge mit inaktiven pyrotechnischen Zündern und somit pyrotechnischen Wirkmaterial in den Kreislauf der Verschrottung und Schrottwiederverwertung zu geben.

Außerdem wird die Anzahl der in einem Fahrzeug eingebauten Insassenschutzeinrichtungen / Verkehrsteilnehmerschutzeinrichtungen weiter steigen und fahrzeugindividuell entsprechend des jeweiligen Kundenausstattungswunsches variieren, so dass auch die Übersichtlichkeit über die Anzahl und Lage der pyrotechnischen Zünder verloren gehen kann und ein Ausbau derer zu teuer und unsicher ist.

Zum Entsorgen von Insassenschutzeinrichtungen mit pyrotechnischen Zündern, sind bereits diverse Lösungen bekannt. Die DE 102 33587 A1 beschreibt eine derartige Lösung und bildet den Ausgangspunkt für die Oberbegriffe der Ansprüche 1 und 5.

Aus der DE 197 53 058 C2 ist beispielsweise ein Verfahren zur Entsorgung pyrotechnischer Zünder sowie ein Entsorgungsgerät zu dessen Durchführung bekannt, bei dem ein Entsorgungszündbefehl an einen Zünder oder ein zwischengeschaltetes Steuergerät ausgegeben und der Zünder gezündet wird / die Zünder gezündet werden.

Aus der DE 101 13 099 A1 ist beispielsweise ein Verfahren zur Entsorgung von Airbags, sowie eine Vorrichtung zur Durchführung des Verfahrens bekannt, bei diesem / dieser die Demontage des Airbags vereinfacht werden kann, indem eine Vorrichtung zum Auffangen von Gasen oder Festkörpern vor dem Airbag in dessen Einbaulage angeordnet und der Airbag gezündet wird, wobei die Vorrichtung vorzugsweise als Trichter mit einer daran angeordneten Absaugeinrichtung ausgebildet ist.

Bei diesen oben genannten Vorrichtungen und Verfahren zur Entsorgung pyrotechnischer Zünder, wird stillschweigend voraus gesetzt, dass die Kommunikation zur Übertragung des Entsorgungsbefehles im Bedarfsfall zu jeder Zeit fehlerfrei funktioniert bzw. nicht störanfällig hinsichtlich Kommunikationsfehlern ist. Da im fahrzeuginternen Steuergerät für die Insassenschutzeinrichtungen / Verkehrsteilnehmerschutzeinrichtungen im Softwarecode entsprechende Routinen implementiert sein müssen, damit dem Steuergerät ein entsprechender Entsorgungsbefehl von außen zugeführt werden kann, umfasst bzw. erstreckt sich diese Fehlerfreiheit über die gesamte Lebensdauer des Systems, damit nicht beispielsweise eine irrtümlicherweise fehlerhafte Interpretation einer einfachen Kommunikationssequenz mit dem Steuergerät, wie dieses in den Werkstätten für Servicezwecke zu erfolgen hat, nicht zu einer unerwünschten Fehlauslösung aller Insassenschutzeinrichtungen / Verkehrsteilnehmerschutzeinrichtungen führt, bzw. führen kann. Ebenso muss sichergestellt sein, dass nicht durch einen Einfachfehler im Software-Ablauf des fahrzeuginternen Steuergerätes für die Insassenschutzeinrichtungen / Verkehrsteilnehmerschutzeinrichtungen, wie beispielsweise einem sogenannten "Code-runaway", nicht versehentlich die im Steuergerät implementierten Software-Routinen / Software-codes zur Entsorgung aktiviert werden können, bzw. falls diese ausgeführt werden würden, dass dieses im Fehlerfall nicht zu den unerwünschten Effekten kommt

Die Aufgabe der Erfindung besteht somit darin, ein Verfahren zur Entsorgung sowie eine Vorrichtung / ein Steuergerät anzugeben / zu schaffen, damit sowohl eine sichere Entsorgung, als auch eine robuste / störunanfällige Betriebsbereitstellung der Vorrichtung mit implementierten Entsorgungsfähigkeiten / Entsorgungsroutinen (Schutz vor fehlerhaften Auslösungen bei auftretenden Einfachfehlem), gewährleistet werden kann.

Diese Aufgabe wird gemäß den Merkmalen der Patentansprüche 1 und 5 gelöst. Vorteilhafte Weiterbildungen der Erfindung ergeben sind aus den Unteransprüchen, wobei auch Kombinationen und Weiterbildungen einzelner Merkmale miteinander denkbar sind.

Der Erfindung liegt der Gedanke zugrunde, eine Auslösung der Entsorgung mittels eines von außen zugeführten Entsorgungsbefehls erfolgen zu lassen, im Gegensatz zu einem beschleunigungsabhängigen öder überrollabhängigen Auslösebefehls im Crashfall, wobei zur Erlangung der oben angesprochenen Sicherheit gegenüber Einfachfehlern, der Entsorgungszündbefehl an den / die Zünder oder ein dazwischengeschaltetes Steuergerät derart erfolgt bzw. übertragen wird, dass die Übertragung des Entsorgungszündbefehls, bzw. die Übermittlung des von außen initiierten Entsorgungszündbefehls, auf mindestens zwei getrennten / unterschiedlichen Schnittstellen erfolgt.

Auf die einzelnen Funktionsprinzipien der bereits angesprochenen Basislösungen wird in dem nachfolgendem erfindungsgemäßem Ausführungsbeispiel nicht mehr näher eingegangen, da das jeweilige Funktionsprinzip bzw. der Inhalt der jeweiligen Schriften, durch den Verweis in vollem Umfang als aufgenommen gilt, bzw. als Stand der Technik betrachtet werden kann.

Der Einfachheit halber werden nachfolgend z.T. nur einzelne Begriffe verwendet werden, wobei zu beachten ist, das hierbei natürlich auch die für ein System erforderlichen, umgebenden Komponenten zu verstehen bzw. inbegriffen / einzubeziehen sind.

In der Beschreibung, in den Ansprüchen, in der Zusammenfassung und in den dazugehörenden Zeichnungen werden die in der hinten angeführten Liste der Bezugszeichen verwendeten Begriffe und zugeordneten Bezugszeichen verwendet.

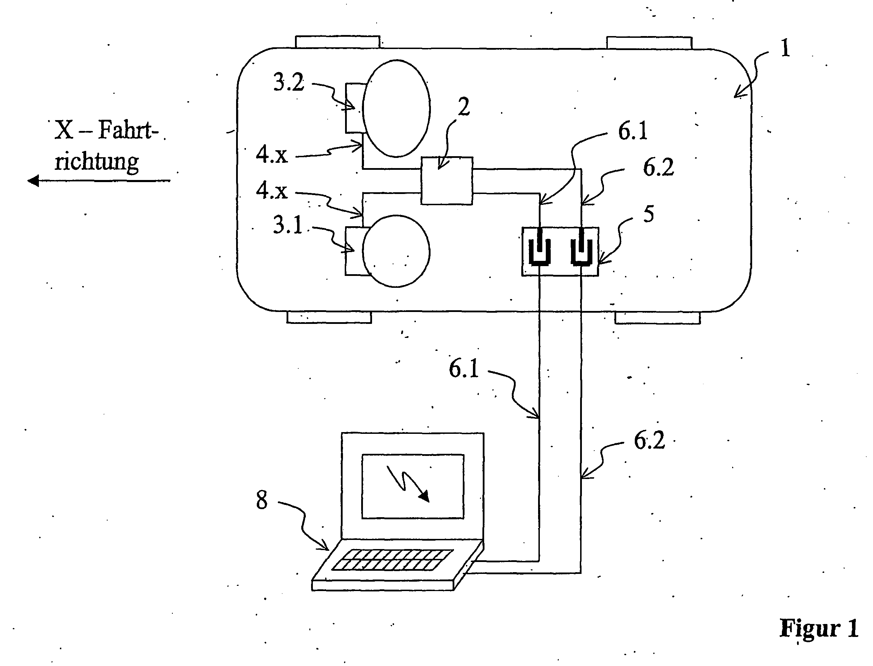

Die Erfindung soll nachfolgend anhand eines Ausführungsbeispiels unter Zuhilfenahme der Figuren 1 bis 6 näher erläutert werden. Es sei bemerkt, dass der Einfachheit halber in der Figurbeschreibung meist nur der Überbegriff eines als Vertreter genannten Systems verwendet wird. Selbstverständlich sind darunter ebenso auch andere Systeme, mit vergleichbarem Funktionsprinzip bzw. Einrichtungen mit sinngemäßen Funktionen, zu verstehen.

### Es zeigen

- Figur 1:: Eine prinzipielle mögliche Realisierung zur Entsorgung der aktiven Schutzeinrichtungen eines Insassenschutzsystems mit pyrotechnischen Zündern, gemäß der Erfindung.
- Figur 2:: Eine prinzipielle mögliche Realisierung zur Entsorgung der aktiven Schutzeinrichtungen .eines Insassenschutzsystems mit pyrotechnischen Zündern, gemäß der Erfindung, ergänzt mit Details.
- Figur 3:: Eine Detaildarstellung des Steuergerätes zur Entsorgung der aktiven Schutzeinrichtungen eines Insassenschutzsystems mit pyrotechnischen Zündern, gemäß der Erfindung.
- Figur 4:: Eine Detaildarstellung des Steuergerätes zur Entsorgung der aktiven Schutzeinrichtungen eines Insassenschutzsystems mit pyrotechnischen Zündern, gemäß der Erfindung.
- Figur 5:: Eine prinzipielle mögliche Realisierung zur Entsorgung der aktiven Schutzeinrichtungen eines Insassenschutzsystems mit pyrotechnischen Zündern, gemäß der Erfindung, dargestellt als BUS-Realisierung.
- Figur 6:: Eine zeitliche Darstellung der Entsorgungszündbefehls-Übertragung.

Figur 1 zeigt eine prinzipielle mögliche Realisierung zur Entsorgung der aktiven Schutzeinrichtungen eines Insassenschutzsystems mit pyrotechnischen Zündern, gemäß der Erfindung.
Das Insassenschutzsystem im Fahrzeug (1) besteht im einfachstem Falle, je nach dem um welche Art von Insassenschutzsystem es sich handelt, aus einem Steuergerät (2) und den dazugehörenden Airbags, wie beispielsweise dem Fahrerairbag (3.1), bestehend aus einem pyrotechnischen Zünder, einem Gasgenerator und einem Luftsack, und dem Beifahrerairbag (3.2), bestehend wiederum aus einem pyrotechnischen Zünder, einem Gasgenerator und einem Luftsack. Das. Steuergerät beinhaltet die elektrischen Leistungsschalter (in dieser Figur nicht näher dargestellten) und die dafür vorgesehenen Schnittstellenleitungen (4.x), die dafür erforderlich sind, um im Crashfall den beschleunigungsabhängigen oder überrollabhängigen Auslösebefehl an die pyrotechnischen Zünder zu übertragen.

Das Steuergerät (2) verfügt über mindestens zwei getrennte / unterschiedliche Schnittstellen (6.1, 6.2), welche an die Diagnosesteckvorrichtung (5) / an den Diagnoseadapter (5) des Fahrzeugs herangeführt sind, damit im Servicefall, bzw. im Werkstattbetrieb, mit zumindest einer Schnittstelle mit dem Steuergerät (2), von außen eine Diagnose des Steuergerätes (2) ermöglicht wird, um beispielsweise den Fehlerspeicher des Steuergerätes zu überprüfen.

Analog dem Werkstatt-Servicetester kann die Diagnosesteckvorrichtung (5) / an den Diagnoseadapter (5) des Fahrzeugs, wie die Figur 1 zeigt, die Vorrichtung (8) zur Erzeugung eines Entsorgungszündbefehles / Entsorgungsbefehles angeschlossen werden, wobei wie Eingangs bereits schon andiskutiert, der Entsorgungsbefehl aus Sicherheitsgründen gemäß der Erfindung über mindestens zwei getrennten / unterschiedlichen Schnittstellen (6.1, 6.2) erfolgen muss.

Im einfachsten Falle handelt es sich hierbei beispielsweise bei der ersten Schnittstelle (6.1) um einen sogenannten CAN-Bus, und bei der zweiten Schnittstelle (6.2) um einen weiteren CAN-Bus, oder einer bereits im Fahrzeug (1) bzw. am Steuergerät (2) vorhandenen Kommunikationsleitung, wie beispielsweise einer PAS-Schnittstelle, einer K-Leitung, einer VAN-Schnittstelle, einer modulierten Energievorsorgungsleitung (Klemme 15) oder dergleichen. Je nach Art der jeweiligen Schnittstelle, kann es sich hierbei um eine Eindraht-, Zweidraht oder Mehrdraht-Schnittstelle handeln.

Ein weiterer Vorteil, welcher sich neben der gewünschten Realisierung einer robusten / störunanfälligen Entsorgungszündungsmöglichkeit ergibt, ist dieser, dass bei der Verwendung von bereits im Fahrzeug (1) bzw. am Steuergerät (2) vorhandenen Schnittstellen (6.1, 6.2) keine weiteren / zusätzliche Kosten für eine dafür erforderliche Schnittstellenbereitstellung (Leitungen, Steckerpins & Interfaces) erforderlich ist.

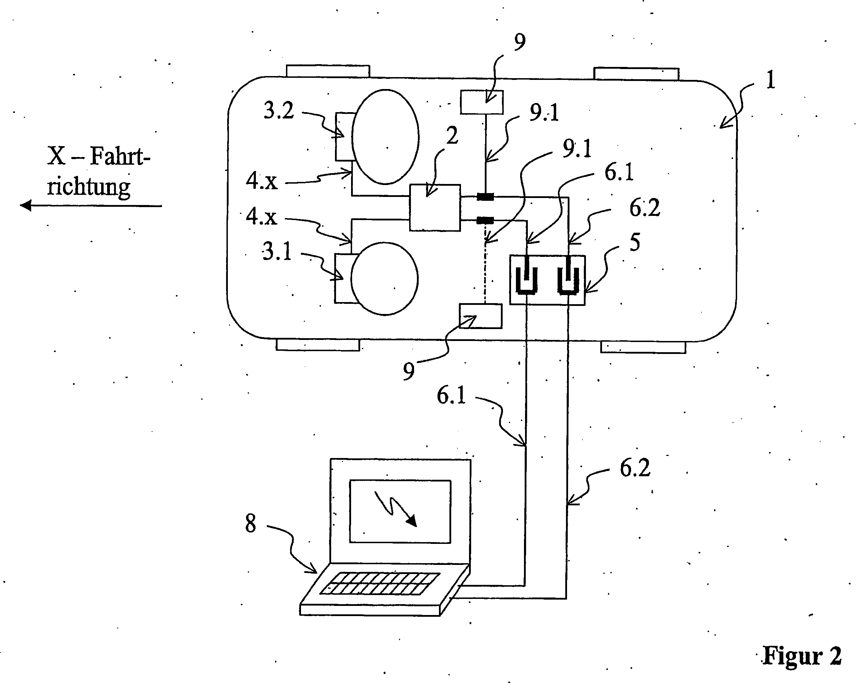

Figur 2 zeigt eine prinzipielle mögliche Realisierung zur Entsorgung der aktiven Schutzeinrichtungen eines Insassenschutzsystems mit pyrotechnischen Zündern, gemäß der Erfindung, ergänzt mit Details.
Das Insassenschutzsystem im Fahrzeug (1) ist analog zur Figur 1 dargestellt, und mit zwei sogenannten ausgelagerten Assistenzsensoren (9) ergänzt, welche je mittels einer Schnittstelle (9.1) mit dem Zentral angeordneten Steuergerät (2) verbunden sind, damit die Assistenzsensoren ihre crashrelevanten Informationen an das Steuergerät (2) übertragen können.

Bei den sogenannten ausgelagerten Assistenzsensoren (9), welche möglichst nahe an der Fahrzeugaußenhaut angebracht sind, handelt es sich um Sensoren zur Überwachung und Erfassung der auf das Fahrzeug (1) einwirkenden Kräfte bzw. Beschleunigungen, damit im Crashfall relativ schnelle Auslösezeiten für das Verkehrsteilnehmerschutzsystem / Insassenschutzsystem gewährleistet werden können.

Wie aus der Figur 2 weiter ersichtlich ist, werden hierbei beispielsweise die Schnittstelle (9.1) zu den einen Assistenzsensor (9), mit der Schnittstelle (6.2) zusammengefasst (jedoch nicht zwingend erforderlich), da im Regelfall jeweils nur von einer angeschlossenen kommunikationsfähigen Einheit (8, 9) eine Kommunikationsanforderung erforderlich ist / durchgeführt wird, da sich die beiden Zwecke (Crashauslöseanforderung & Entsorgungszündungsanforderung) mehr oder minder ausschließen. Wie in der Figur weiter angedeutet, können hierbei auch die andere Schnittstelle (9.1) zu den anderen Assistenzsensor (9), mit der Schnittstelle (6.1) zusammengefasst (jedoch nicht zwingend erforderlich) werden, sofern die beiden kommunikationsfähigen Einheiten (8, 9) über die selbe physikalische Schnittstelle verfügen.

Zur Durchführung der gewünschten Entsorgungszündung wird an den zwei getrennten / unterschiedlichen Schnittstellen (6.1, 6.2), zeitgleich bzw. zeitlich überlappend je eine Entsorgungsauslöseanforderung / Entsorgungszündbefehl angelegt / aufgebracht, damit zumindest für eine gewisse definierte Zeit überlappend, ein Schließen der / des Leistungsschalter/s LOW / der Schnittstelle/n L (4.1) und der / des Leistungsschalter/s HIGH / der Schnittstelle/n H (4.2) bewirkt wird. Sofern mehrere pyrotechnische Zünder, als in der Figur dargestellt, bzw. mehr als eine Insassenschutzeinrichtung zu entsorgen sind, hat es sich als sinnvoll gezeigt, dass das Protokoll zur Aktivierung der Entsorgungszündung so auszulegen ist, dass ein jeder einzelne pyrotechnische Zünder einzeln / separat angesprochen werden kann, so dass beispielsweise die bei der Entsorgungszündung entstehende Druckentwicklung im Fahrzeug (1) auf ein gewisses Maß begrenzt gehalten werden kann.

Das Protokoll bzw. der Protokollinhalt der entsprechenden Schnittstelle (6.1, 6.2), das für die Durchführung der Entsorgungszündung anzuwenden ist, insbesondere dann wenn beispielsweise die Schnittstelle (9.1) mit der Schnittstelle (6.2) zusammengeführt ist, ist vorzugsweise so zu wählen, dass ein Befehl, welcher eine Entsorgungszündung einleiten soll, auf der Schnittstelle (6.2) so definiert ist, wie dieser im definiertem Protokoll-Umfang des Assistenzsensors (9), bzw. auf dessen Schnittstelle (9.1) nicht vorgesehen ist. Alternativ, kann jedoch auch bewusst, insbesondere wenn die Protokolltiefe relativ begrenz ist, das Protokoll bzw. der Protokollinhalt der entsprechenden Schnittstelle (6.1, 6.2) derart gewählt werden, dass ein Befehl, welcher eine Entsorgungszündung einleiten soll, auf der Schnittstelle (6.2) so definiert ist, wie dieser im definiertem Protokoll-Umfang des Assistenzsensors (9), bzw. auf dessen Schnittstelle (9.1) einer Auslöseanforderungsinformation des Assistenzsensors (9) entspricht. Letzteres ist insbesondere immer dann relevant, wenn die Einheit zur Signaldecodierung (7.2) bzw. Einheit zur Pegelwandlung (7.2), welche vorzugsweise als ASIC bzw. als Überwachungseinheit in einem ASIC, oder als µP realisiert ist, über auslösefähige Algorithmen verfügt.

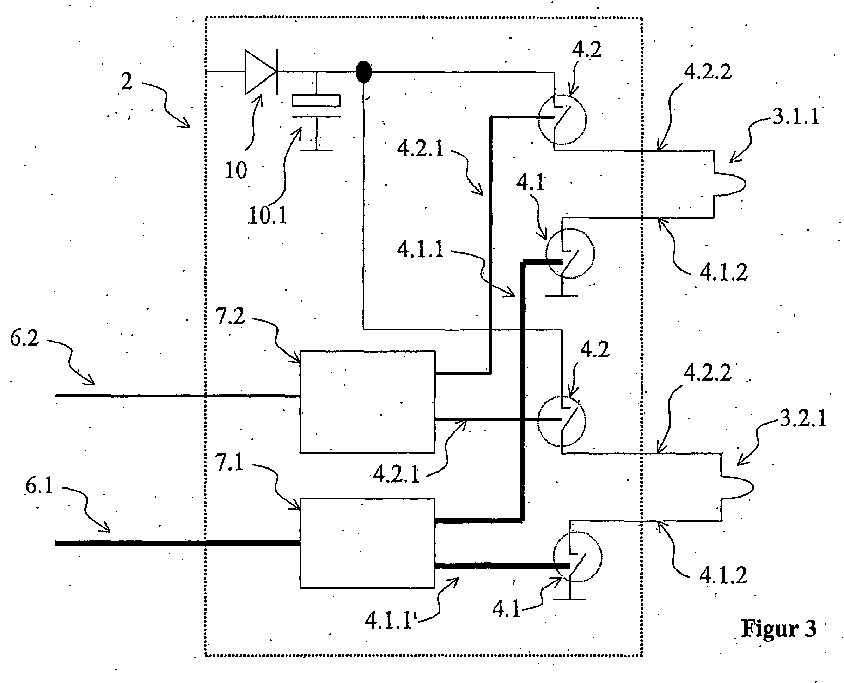

Figur 3 zeigt eine Detaildarstellung des Steuergerätes (2) zur Entsorgung der aktiven Schutzeinrichtungen eines Verkehrsteilnehmerschutzsystems / Insassenschutzsystems mit pyrotechnischen Zündern, gemäß der Erfindung.

Die gemäß der Erfindung mindestens zwei getrennten / unterschiedlichen Schnittstellen (6.1, 6.2) des Steuergerätes (2), werden hier zwei getrennten / unterschiedlichen, zueinander unabhängigen Einheiten (7.1, 7.2) zugeführt. Die erste Einheit (7.1), in dieser applikationsbedingt beispielsweise der Algorithmus, zur Auswertung der crashrelevanten beschleunigungsabhängigen oder überrollabhängigen Signalverläufe der auf das Fahrzeug (1) einwirkenden Kräfte bzw. Beschleunigungen, implementiert ist, dient als Einheit zur Signaldecodierung (7.1) bzw. Einheit zur Pegelwandlung (7.1), und ist vorzugsweise als ASIC bzw. als Überwachungseinheit in einem ASIC, oder als µP realisiert. Ebenso ist die zweite Einheit (7.2), in dieser applikationsbedingt beispielsweise ein Überwachungs-Algorithmus, zur Auswertung der crashrelevanten beschleunigungsabhängigen oder überrollabhängigen Signalverläufe der auf das Fahrzeug (1) einwirkenden Kräfte bzw. Beschleunigungen, implementiert ist, bzw. für Kommunikationsaufgaben mit den Steuergerät (2) umgebenden Einheiten / Systemen oder außerhalb des Fahrzeugs (1) befindlichen kommunikationsfähigen Einheiten zuständig ist, dient ebenso als Einheit zur Signaldecodierung (7.2) bzw. Einheit zur Pegelwandlung (7.2), und ist vorzugsweise als ASIC bzw. als Überwachungseinheit in einem ASIC, oder als µP realisiert.

Die Ausgänge der mindestens beiden getrennten / unterschiedlichen, zueinander unabhängigen Einheiten (7.1, 7.2), sind jeweils mit den im Zündkreis für die Entsorgungszündung erforderlichen stromfähigen Leistungsschaltern HIHG / Schnittstellen H (4.2) und stromfähigen Leistungsschaltern LOW / Schnittstellen L (4.1), mittels der verbindenden entsprechenden Steuerleitungen (4.1.1, 4.2.1) verbunden. Die Ausgänge (4.2.2) der stromfähigen Leistungsschaltern HIHG / Schnittstellen H (4.2), sind mit den pyrotechnischen Zündern (3.1.1, 3.2.1) für den Fahrerairbag (3.1) und Beifahrerairbag (3.2) verbunden, welche mit deren zweiten Anschluss jeweils mit dem Eingang (4.1.2) der stromfähigen Leistungsschaltern LOW / Schnittstellen L (4.1) verbunden sind.

Sobald die mindestens beiden getrennten / unterschiedlichen, zueinander unabhängigen Einheiten (7.1, 7.2) über die Schnittstellen (6.1, 6.2) einen Entsorgungsauslösebefehl erhalten, wird von diesen ein Schließen der stromfähigen Leistungsschaltern HIHG / Schnittstellen H (4.2) und stromfähigen Leistungsschaltern LOW / Schnittstellen L (4.1) initiiert, sodass ein Stromfluss vom Energiespeicher (10.1), welcher vom nicht näher dargestellten Netzteil (10) des Steuergerätes (2) geladen wird, über die pyrotechnischen Zünder (3.1.1, 3.2.1) ermöglicht wird, welcher letztendlich zu der erwünschten Aktivierung der pyrotechnischen Zünder (3.1.1, 3.2.1) bzw. zur Entsorgungszündung der pyrotechnischen Zünder (3.1.1, 3.2.1) plus der damit verbundenen Schutzeinrichtungen, wie Fahrerairbag (3.1) und Beifahrerairbag (3.2), führt.

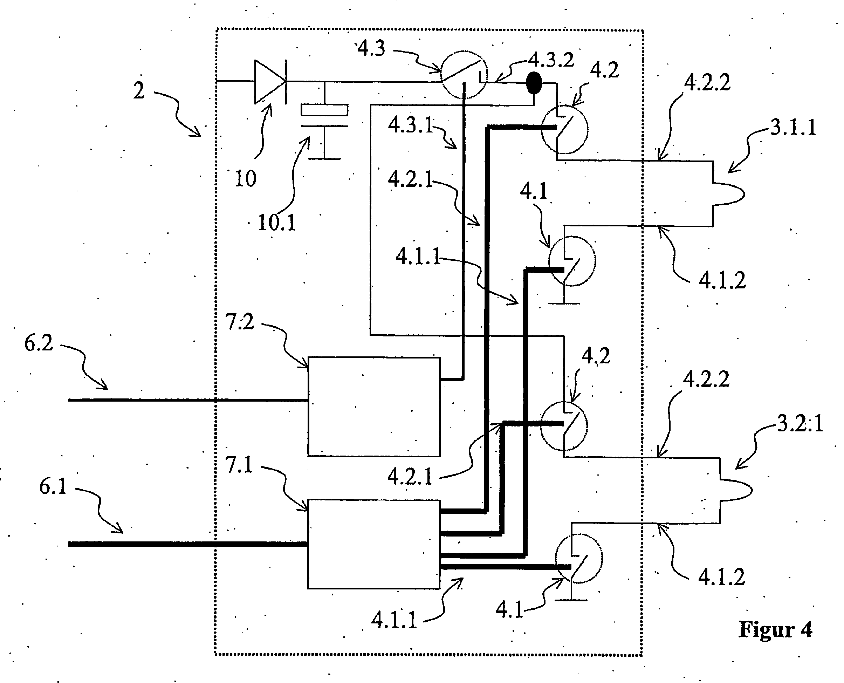

Figur 4 zeigt eine Detaildarstellung des Steuergerätes (2) zur Entsorgung der aktiven Schutzeinrichtungen eines Verkehrsteilnehmerschutzsystems / Insassenschutzsystems mit pyrotechnischen Zündern, gemäß der Erfindung.
Die gemäß der Erfindung mindestens zwei getrennten / unterschiedlichen Schnittstellen (6.1, 6.2) des Steuergerätes (2), werden hier analog zur Figur 3 zwei getrennten / unterschiedlichen, zueinander unabhängigen Einheiten (7.1, .7.2) zugeführt. Zusätzlich, gegenüber der Figur 3, befindet sich in diesem Ausführungsbeispiel ein dritter Leistungsschalter / eine Schnittstelle 3 (4.3), zwischen dem Energiespeicher (10.1) des Steuergerätes (2) und den stromfähigen Leistungsschaltern HIHG / Schnittstellen H (4.2).

Abweichen zu der Figur 3, erfolgt in Figur 4, die Ansteuerung der stromfähigen Leistungsschaltern HIHG / Schnittstellen H (4.2) und stromfähigen Leistungsschaltern LOW / Schnittstellen L (4.1) erfolgt, mittels der verbindenden entsprechenden Steuerleitungen (4.1.1, 4.2.1), durch die Einheit 1 zur Signaldecodierung (7.1). Die Ansteuerung des dritten Leistungsschalters / der Schnittstelle 3 (4.3) erfolgt bei diesem Beispiel mittels der verbindenden entsprechenden Steuerleitungen (4.3.1), durch die Einheit 2 zur Signaldecodierung (7.2). Somit wird auch in diesem Beispiel der Figur 4 (analog zur Figur 3) gewährleistet, dass eine Entsorgungszündung, jeweils über zwei getrennte / unabhängige / unterschiedliche Signalpfade wie auch mindestens zwei getrennten / unabhängigen / unterschiedlichen Schaltungsteilen erfolgt, damit die gewünschte Robustheit / Störsicherheit gegen eine unbeabsichtigte Entsorgungszündung, auch bei auftreten bzw. vorhanden sein eines Einfachfehlers, gewährleistet werden kann.

Als weitere Möglichkeit, um die gewünschte Robustheit / Störsicherheit gegen eine unbeabsichtigte Entsorgungszündung zu erlangen, ist die nicht näher dargestellte Realisierung zu betrachten, bei dieser die zur Entsorgung erforderliche Zündenergie, mittels einer ersten Schnittstelle (Zuleitung) (6.1, 6.2) von extern, eigens zum Zwecke der Entsorgungszündung statisch oder dynamisch zugeführt wird (anstatt vom Energiespeicher (10.1) des Steuergerätes (2)), und mittels einer weiteren Schnittstelle (6.1, 6.2) und einer Einheit 1 oder Einheit 2 zur Signaldecodierung (7.1, 7.2), der entscheidend Befehl zur Entsorgungszündung übertragen wird.

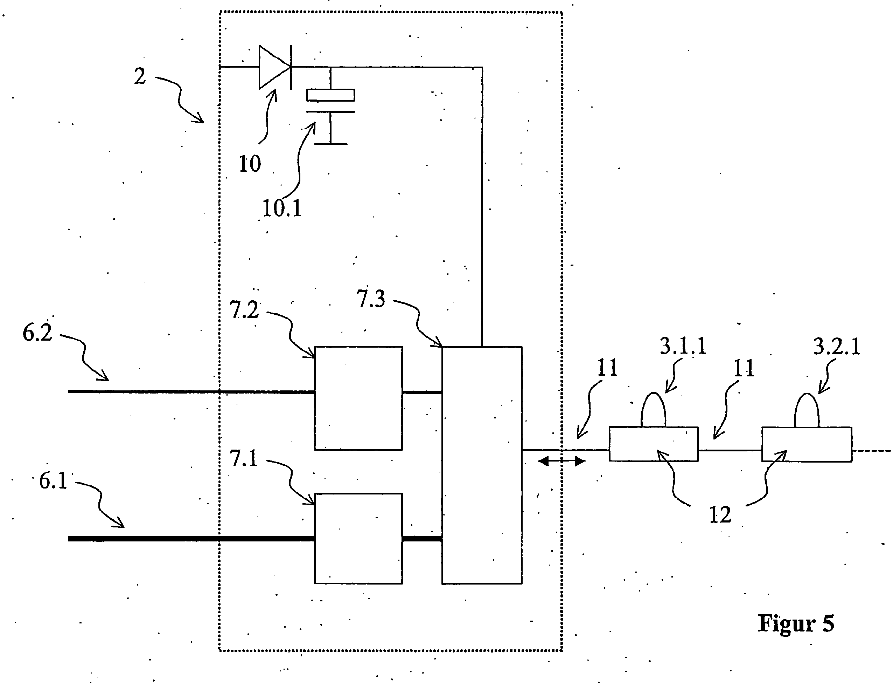

Figur 5 zeigt eine prinzipielle mögliche Realisierung zur Entsorgung der aktiven Schutzeinrichtungen eines Insassenschutzsystems mit pyrotechnischen Zündern, gemäß der Erfindung, dargestellt als BUS-Realisierung / "Zünd-BUS-Airbag-Realisierung".
Abweichend zur Figur 3, befinden sich die zur Entsorgungszündung der pyrotechnische Zünder (3.1.1, 3.2.1) erforderlichen Leistungsschaltern HIGH / Schnittstellen H (4.2) und Leistungsschaltern LOW / Schnittstellen L (4.1), nicht im Steuergerät (2), sonder in den sogenannten IPEs (Integrierte Peripher Elektronikeinheiten) (12), welche mit einer fahrzeuginternen BUS-Verbindung (11) mit dem Steuergerät (2) bzw. mit der im Steuergerät (2) dafür vorgesehenen BUS-Schnittstellentreiber-Einheit (7.3) damit verbunden sind. Die BUS-Schnittstellentreiber-Einheit (7.3) ist eingangsseitig mit den beiden Ausgängen der beiden getrennten / unterschiedlichen, zueinander unabhängigen Einheiten (7.1, 7.2) verbunden, um die entsprechenden Steuerbefehle, wie beispielsweise den Entsorgungszündungssteuerbefehl, von den beiden getrennten / unterschiedlichen, zueinander unabhängigen Einheiten (7.1, 7.2) empfangen zu können, und diese mittels der fahrzeuginternen BUS-Verbindung (11) an die sogenannten IPEs (Integrierte Peripher Elektronikeinheiten) (12), bzw. an diesen angeschlossenen pyrotechnischen Zünder (3.1.1, 3.2.1) zu leiten / übertragen, um dort eine Entsorgungszündung zu initiieren.

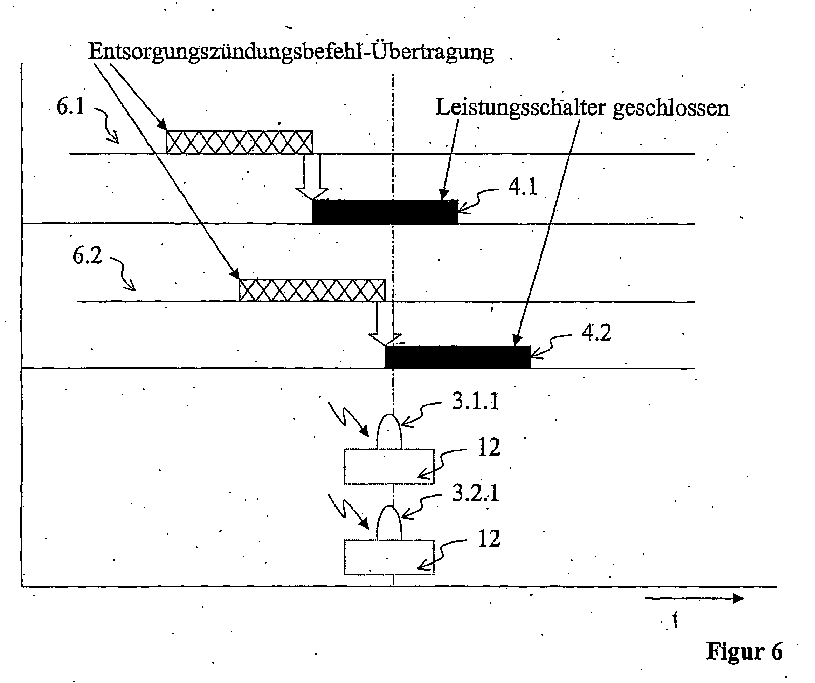

Figur 6 zeigt eine zeitliche Darstellung der Entsorgungszündbefehls-Übertragung / Umsetzung / Ausführung.
An der ersten Schnittstelle (6.1) wird, wie dargestellt, von extern / außen ein Entsorgungszündungsbefehl aufgebracht, welcher gemäß Figur 3 im Steuergerät für eine definierte Zeit ein Schließen der / des Leistungsschalter/s LOW / der Schnittstelle/n L (4.1) zur Folge hat / bewirkt. Wenn zeitgleich bzw. mit einer gewissen zeitlichen Übereinstimmung an der zweiten Schnittstelle (6.2) von extern / außen ebenso ein Entsorgungszündungsbefehl aufgebracht wird, welcher im Steuergerät ebenso wieder für eine definierte Zeit ein Schließen der / des Leistungsschalter/s HIGH / der Schnittstelle/n H (4.2) zur Folge hat / bewirkt, führt dieses zu der gewünschten Entsorgungszündung der Verkehrstellnehmersicherheitseinrichtungen, die der Übersichtlichkeit wegen, in der Figur 6, ersatzweise nur als pyrotechnische Zünder (3.1.1, 3.2.1) für den Fahrerairbag (3.1) und für den Beifahrerairbag (3.2) dargestellt sind. Die hierbei zur Entsorgungszündung der pyrotechnische Zünder (3.1.1, 3.2.1) erforderlichen Leistungsschaltern HIGH / Schnittstellen H (4.2) und Leistungsschaltern LOW / Schnittstellen L (4.1), können sich hierbei, wie durch die strichliierten Linien angedeutet, entweder in den IPEs (Integrierte Peripher Elektronikeinheiten) (12) befinden, sofern es sich um ein sogenannte "Zünd-BUS-Airbag-Realisierung" handelt, wie diese in Figur 5 dargestellt ist, oder im Steuergerät (2) befinden, sofern es sich beispielsweise um eine sogenannte herkömmliche / standardmäßige "Zentral-Airbag-Realisierung" handelt, wie diese in Figur 3 dargestellt ist.

### Bezugszeichenliste

- 1: Fahrzeug
- 2: Steuergerät
- 3.1: Fahrerairbag (incl. Gasgenerator mit pyrotechnischen Zünder)
- 3.1.1: Pyrotechnischer Zünder für Fahrerairbag
- 3.2: Beifahrerairbag (incl. Gasgenerator mit pyrotechnischen Zünder)
- 3.2.1: Pyrotechnischer Zünder für Beifahrerairbag
- 4.1: Schnittstelle L (z.B. Leistungsschalter LOW)
- 4.1.1: Ansteuerung für Schnittstelle L
- 4.1.2: Strompfad von Schnittstelle L (z.B. Eingang Leistungsschalter LOW)
- 4.2: Schnittstelle H (z.B. Leistungsschalter HIGH)
- 4.2.1: Ansteuerung für Schnittstelle H
- 4.2.2: Strompfad von Schnittstelle H (z.B. Ausgang Leistungsschalter HIGH)
- 4.3: Schnittstelle 3 (z.B. dritten Leistungsschalter)
- 4.3.1: Ansteuerung für Schnittstelle 3
- 4.3.2: Strompfad von Schnittstelle 3 (z.B. Ausgang dritter Leistungsschalter)
- 5: Diagnosesteckvorrichtung / Diagnoseadapter (für Fahrzeugdiagnose)
- 6.1: Schnittstelle 1 (z.B. CAN-Bus)
- 6.2: Schnittstelle 2 (z.B. PAS-Schnittstelle)
- 7.1: Einheit 1 zur Signaldecodierung / Pegelwandlung (z.B. logische Recheneinheit / µP)
- 7.2: Einheit 2 zur Signaldecodierung / Pegelwandlung (z.B. logische Einheit / ASIC)
- 7.3: BUS-Schnittstellentreiber-Einheit
- 8: Vorrichtung zur Erzeugung eines Entsorgungsbefehles
- 9: Assistenzsensor
- 9.1: Schnittstelle zu Assistenten (z.B. PAS-Schnittstelle - Periphere-Assistenten-Schnittst.)
- 10: Netzteil
- 10.1: Energiespeicher
- 11: Interne BUS-Verbindung (z.B. spezieller Fahrzeugbus)
- 12: IPE (z.B. Integrierte Periphere Elektronikeinheit - Elektr. mit Leistungssch. H & L)

## Patentansprüche

1. Verfahren zum Entsorgen von Verkehrsteilnehmerschutzeinrichtungen mit mindestens einem pyrotechnischen Zünder, bei diesem ein Entsorgungszündbefehl an den Zünder (3.1.1, 3.2.1) oder ein dazwischen geschaltetes Steuergerät (2) bereitgestellt wird und der Zünder (3.1.1, 3.2.1) gezündet wird, **dadurch gekennzeichnet, dass**
a) die Übertragung der Entsorgungszündbefehle an den Zünder (3.1.1, 3.2.1) oder das dazwischen geschaltete Steuergerät (2) jeweils auf mindestens zwei unterschiedlichen, getrennten und unabhängigen Schnittstellen (6.1, 6.2, 4.1, 4.2, 4.3) erfolgt und
b) die Decodierung des von außen initiierten Entsorgungszündbefehls im Steuergerät (2) mittels mindestens zwei unterschiedlichen, getrennten und unabhängigen Einheiten zur Signaldecodierung (7.1, 7.2) und die Weiterleitung auf mindestens zwei unterschiedlichen, getrennten und unabhängigen Signalpfaden (4.1, 4.2, 4.1.1, 4.2.1, 4.2.2, 4.1.2) erfolgt.

2. Verfahren zum Entsorgen von Verkehrstellnehmerschutzeinrichtungen nach Anspruch 1, **dadurch gekennzeichnet, dass** eine zeitliche Übereinstimmung der Entsorgungszündbefehle an den mindestens zwei getrennten / Eindraht-, Zweidraht- oder Mehrdraht-Schnittstellen (6.1, 6.2), bzw. eine zeitliche Überschneidung / Überlappung der Schnittstellen (4.1, 4.2) für eine gewisse definierte Zeit erforderlich ist, damit ein zeitgleiches Schließen der / des Leistungsschalter/s LOW / der Schnittstelle/n L (4.1) und der / des Leistungsschalter/s HIGH / der Schnittstelle/n H (4.2) bewirkt wird.

3. Verfahren zum Entsorgen von Verkehrsteilnehmerschutzeinrichtungen nach einem oder mehreren der Ansprüche 1 bis 2, **dadurch gekennzeichnet, dass** für die Durchführung der Entsorgungszündung zumindest eine Schnittstelle (6.1, 6.2) verwendet wird, auf welcher auch ein Assistenzsensor (9) Daten überträgt (9.1) und das Protokoll so gewählt ist, dass ein Befehl, welcher eine Entsorgungszündung einleiten soll, auf der Schnittstelle (6.2) so definiert ist, wie dieser im definiertem Protokoll-Umfang des Assistenzsensors (9) nicht vorgesehen ist

4. Verfahren zum Entsorgen von Verkehrsteilnehmerschutzeinrichtungen nach einem oder mehreren der Ansprüche 1 bis 2, **dadurch gekennzeichnet, dass** für die Durchführung der Entsorgungszündung zumindest eine Schnittstelle (6.1, 6.2) verwendet wird, auf welcher auch ein Assistenzsensor (9) Daten überträgt (9.1) und das Protokoll so gewählt ist, dass ein Befehl, welcher eine Entsorgungszündung einleiten soll, auf der Schnittstelle (6.2) so definiert ist, wie dieser im definiertem Protokoll-Umfang des Assistenzsensors (9) einer Auslöwanforderungsinformaton des Assistenzsensors (9) entspricht.

5. Vorrichtung zur Durchführung des Verfahrens nach einem der vorangehenden Ansprüche zum Entsorgen von Verkehrsteilnehmerschutzeinrichtungen mit mindestens einem pyrotechnischen Zünder, bei dieser ein Entsorgungszündbefehl an den Zünder (3.1.1, 3.2.1) oder ein dazwischen geschaltetes Steuergerät (2) bereitgestellt werden kann und der Zünder (3.1.1, 3.2.1) gezündet werden kann, **dadurch gekennzeichnet, dass**
a) mindestens zwei unterschiedliche, getrennte und unabhängige Schnittstellen (6.1, 6.2, 4.1, 4.2, 4.3) zur Übertragung / Übermittlung der Entsorgungszündbefehle an den / die Zünder (3.1.1, 3.2.1) oder ein dazwischen geschaltetes Steuergerät (2) vorgesehen und im Steuergerät (2) zwei unterschiedliche, getrennte und unabhängige Einheiten zur Signaldecodierung (7.1, 7.2) für die Decodierung des von außen initiierten Entsorgungszündbefehls und mindestens zwei unterschiedliche, getrennte und unabhängige Signalpfade (4.1, 4.2, 4.1.1, 4.2.1, 4.2.2, 4.1.2) zur Weiterleitung vorgesehen sind.

6. Vorrichtung nach Anspruch 5, **dadurch gekennzeichnet, dass** es sich bei einer oder mehreren Schnittstelle/n (6.1, 6.2) um eine CAN-Bus-Schnlttstelle handelt.

7. Vorrichtung nach Anspruch 5 oder 6, **dadurch gekennzeichnet, dass** es sich bei einer oder mehreren Schnittstelle (6.1, 6.2) um eine VAN-Bus-Schnittstelle handelt

8. Vorrichtung nach Anspruch 5 oder 6, **dadurch gekennzeichnet, dass** es sich bei einer oder mehreren Schnittstelle/n (6.1, 6.2) um eine PAS-Schnittstelle handelt.

9. Vorrichtung nach Anspruch 5 oder 6, **dadurch gekennzeichnet, dass** es sich bei einer oder mehreren Schnittstelle/n (6.1, 6.2) um eine K-Schnittstelle handelt

10. Vorrichtung nach Anspruch 5 oder 6, **dadurch gekennzeichnet, dass** es sich bei einer Schnittstelle (6.1, 6.2) um eine Energieversorgungsleitung mit einer aufmodulierter Information handelt.

11. Vorrichtung nach einem der Ansprüche 5 bis 10, **dadurch gekennzeichnet, dass** die Einheit zur Signaidecodierung (7.1) bzw. Einheit zur Pegelwandlung (7.2), vorzugsweise als ASIC, als Überwachungseinheit in einem ASIC oder als Mikroprozessor realisiert ist.

12. Vorrichtung nach Anspruch 11, **dadurch gekennzeichnet, dass** die Einheiten zur Signaldecadierung (7.1, 7.2) bzw. Einheiten zur Pegelwandlung (7.2) über auslösefähige Algorithmen verfügen.

13. Verwendung des Verfahrens nach einem der Ansprüche 1 bis 4 oder der Vorrichtung nach einem der Ansprüche 5 bis 12 für die Entsorgung von Rürkhahosystamen, wie Gurtstraffer, Airbag, Fußgängerschutzeinrichtungen oder Überrollschutzsystemen.

## Claims

1. A method for disposing of road user protection devices with at least one pyrotechnic igniter, in which method a disposal ignition command is supplied to the igniter(3.1.1, 3.2.1) or a control device (2) which is connected between and the igniter (3.1.1, 3.2.1) is ignited, **characterized in that**
a) the disposal ignition commands are transferred to the igniter (3.1.1, 3.2.1) or the control device (2) which is connected between in each case on at least two different, separate and independent interfaces (6.1, 6.2, 4.1, 4.2, 4.3), and
b) the disposal ignition command initiated from outside is decoded in the control device (2) by means of at least two different, separate and independent signal decoding units (7.1, 7.2) and forwarded on at least two different, separate and independent signal paths (4.1, 4.2, 4.1.1, 4.2.1, 4.2.2, 4.1.2).

2. A method for disposing of road user protection devices according to claim 1, **characterized in that** a time consistency of the disposal ignition commands at the at least two separate / single wire, dual wire, or multiple wire interfaces (6.1, 6.2) or a time crossover/overlap of the interfaces (4.1, 4.2) for a specific defined time is required in order to achieve a simultaneous closing of the power switch(es) LOW / of the interface(s) L (4.1) and of the power switch(es) HIGH / of the interface(s) H (4.2).

3. A method for disposing of road user protection devices according to any one or more of claims 1 to 2, **characterized in that** in order to implement the disposal ignition, at least one interface (6.1, 6.2) is used on which an assistance sensor (9) also transfers data (9.1) and the protocol is selected in such a manner that a command which is intended to initiate a disposal ignition is defined on the interface (6.2) in such a way as is not provided in the defined protocol scope of the assistance sensor (9).

4. A method for disposing of road user protection devices according to any one or more of claims 1 to 2, **characterized in that** in order to implement the disposal ignition, at least one interface (6.1, 6.2) is used on which an assistance sensor (9) also transfers data (9.1) and the protocol is selected in such a manner that a command which is intended to initiate a disposal ignition is defined on the interface (6.2) in such a way as corresponds to trigger request information of the assistance sensor (9) in the defined protocol scope of the assistance sensor (9).

5. A device for implementing the method according to any one of the preceding claims for disposing of road user protection devices with at least one pyrotechnic igniter, in which a disposal ignition command can be supplied to the igniter (3.1.1, 3.2.1) or a control device (2) which is connected between and the igniter (3.1.1, 3.2.1) can be ignited, **characterized in that**
a) at least two different, separate and independent interfaces (6.1, 6.2, 4.1, 4.2, 4.3) are provided for transferring/transmitting the disposal ignition commands to the igniter(s) (3.1.1., 3.2.1) or a control device (2) which is connected between, and in the control device (2) two different, separate and independent signal decoding units (7.1, 7.2) are provided for decoding the disposal ignition command initiated from outside, and at least two different, separate and independent signal paths (4.1, 4.2, 4.1.1, 4.2.1, 4.2.2, 4.1.2) are provided for forwarding purposes.

6. A device according to claim 5, **characterized in that** one or more interface(s) (6.1, 6.2) is/are a CAN bus interface.

7. A device according to either of claims 5 or 6, **characterized in that** one or more interface(s) (6.1, 6.2) is/are a VAN bus interface.

8. A device according to either of claims 5 or 6, **characterized in that** one or more interface(s) (6.1, 6.2) is/are a PAS interface.

9. A device according to either of claims 5 or 6, **characterized in that** one or more interface(s) (6.1, 6.2) is/are a K interface.

10. A device according to either of claims 5 or 6, **characterized in that** one interface (6.1, 6.2) is a power supply line with modulated up information.

11. A device according to any one of claims 5 to 10, **characterized in that** the signal decoding unit (7.1) or level conversion unit (7.2) is preferably realised as an ASIC, as a monitoring unit in an ASIC or as a microprocessor.

12. A device according to claim 11, **characterized in that** the signal decoding units (7.1, 7.2) or level conversion units (7.2) have algorithms which can be activated.

13. The use of a method according to any one of claims 1 to 4, or of the device according to any one of claims 5 to 12 for disposing of restraint systems such as belt tighteners, airbags, pedestrian protection devices or rollover protection systems.

## Revendications

1. Procédé pour l'élimination de dispositifs de protection des usagers de la route avec au moins un allumeur pyrotechnique, sur lequel une commande d'allumage d'élimination est fournie à l'allumeur (3.1.1, 3.2.1) ou à un dispositif de commande (2) intercalé et l'allumeur (3.1.1, 3.2.1) est allumé, **caractérisé en ce que**
a) la transmission des commandes d'allumage d'élimination à l'allumeur (3.1.1, 3.2.1) ou au dispositif de commande (2) intercalé a lieu respectivement sur au moins deux interfaces (6.1, 6.2, 4.1, 4.2, 4.3) différentes, séparées et indépendantes et
b) le décodage de la commande d'allumage d'élimination initiée de l'extérieur a lieu dans le dispositif de commande (2) au moyen d'au moins deux unités différentes, séparées et indépendantes pour le décodage du signal (7.1, 7.2) et le renvoi a lieu sur au moins deux chemins de signal (4.1, 4.2, 4.1.1, 4.2.1, 4.2.2, 4.1.2) différents, séparés et indépendants.

2. Procédé pour l'élimination de dispositifs de protection des usagers de la route selon la revendication 1, **caractérisé en ce qu'**une concordance temporelle des commandes d'allumage d'élimination aux au moins deux interfaces séparées / unifilaires, bifilaires ou multifilaires (6.1, 6.2) ou encore un chevauchement / recouvrement temporel des interfaces (4.1, 4.2) sont nécessaires pour un certain temps défini, afin qu'une fermeture simultanée de/des interrupteurs/s de puissance LOW / de l'/des interface/s L (4.1) et de l'/des interrupteurs/s de puissance HIGH / de l'/des interface/s H (4.2) soit effectuée.

3. Procédé pour l'élimination de dispositifs de protection des usagers de la route selon l'une ou plusieurs des revendications 1 à 2, **caractérisé en ce que**, pour l'exécution de l'allumage d'élimination, au moins une interface (6.1, 6.2) est employée, sur laquelle également un capteur d'assistance (9) transmet des données (9.1) et le protocole est choisi de telle sorte qu'une commande, laquelle doit déclencher un allumage d'élimination, est définie sur l'interface (6.2) d'une manière telle que ladite commande n'est pas prévue dans le volume de protocole défini du capteur d'assistance (9).

4. Procédé pour l'élimination de dispositifs de protection des usagers de la route selon l'une ou plusieurs des revendications 1 à 2, **caractérisé en ce que,** pour l'exécution de l'allumage d'élimination, au moins une interface (6.1, 6.2) est employée, sur laquelle également un capteur d'assistance (9) transmet des données (9.1) et le protocole est choisi de telle sorte qu'une commande, laquelle doit déclencher un allumage d'élimination, est définie sur l'interface (6.2) d'une manière telle que ladite commande correspond à une information de demande de déclenchement du capteur d'assistance (9) dans le volume de protocole défini du capteur d'assistance (9).

5. Dispositif pour l'exécution du procédé selon l'une des revendications précédentes pour l'élimination de dispositifs de protection d'usagers de la route avec au moins un allumeur pyrotechnique, sur lequel une commande d'allumage d'élimination peut être fournie à l'allumeur (3.1.1, 3.2.1) ou à un dispositif de commande (2) intercalé et l'allumeur (3.1.1, 3.2.1) peut être allumé, **caractérisé en ce que**
a) au moins deux interfaces différentes, séparées et indépendantes (6.1, 6.2, 4.1, 4.2, 4.3) sont prévues pour la transmission / le transfert des commandes d'allumage d'élimination à l'/aux allumeur/s (3.1.1, 3.2.1) ou à un dispositif de commande (2) intercalé et
b) dans le dispositif de commande (2), deux unités différentes, séparées et indépendantes pour le décodage du signal (7.1, 7.2) sont prévues pour le décodage de la commande d'allumage d'élimination initiée de l'extérieur et au moins deux chemins de signal (4.1, 4.2, 4.1.1, 4.2.1, 4.2.2, 4.1.2) différents, séparés et indépendants sont prévus pour le renvoi.

6. Dispositif selon la revendication 5, **caractérisé en ce qu'**une ou plusieurs interface/s (6.1, 6.2) sont une interface bus CAN.

7. Dispositif selon la revendication 5 ou 6, **caractérisé en ce qu'**une ou plusieurs interface/s (6.1, 6.2) sont une interface bus VAN.

8. Dispositif selon la revendication 5 ou 6, **caractérisé en ce qu'**une ou plusieurs interface/s (6.1, 6.2) sont une interface PAS.

9. Dispositif selon la revendication 5 ou 6, **caractérisé en ce qu'**une ou plusieurs interface/s (6.1, 6.2) sont une interface K.

10. Dispositif selon la revendication 5 ou 6, **caractérisé en ce qu'**une interface (6.1, 6.2) est une ligne d'approvisionnement en énergie avec information modulée.

11. Dispositif selon l'une des revendications 5 à 10, **caractérisé en ce que** l'unité pour le décodage de signal (7.1) ou encore l'unité pour la conversion de niveau (7.2) sont réalisées de préférence comme ASIC, comme unité de surveillance dans un ASIC ou comme microprocesseur.

12. Dispositif selon la revendication 11, **caractérisé en ce que** les unités pour le décodage de signal (7.1, 7.2) ou encore les unités pour la conversion de niveau (7.2) disposent d'algorithmes susceptibles de déclenchement.

13. Utilisation du procédé selon l'une des revendications 1 à 4 ou du dispositif selon l'une des revendications 5 à 12 pour l'élimination de systèmes de retenue, comme des prétensionneurs de ceinture, des airbags, des dispositifs de protection des piétons ou des systèmes de protection anti-retournement.
